# EUROPÄISCHE PATENTANMELDUNG

(11) **EP 4 124 769 A1**
(43) Veröffentlichungstag der Anmeldung: **01.02.2023**
(21) Anmeldenummer: 22184875.7
(22) Anmeldetag: 14.07.2022
(51) Int. Cl.: F16B 43/02, F16B 47/00, F16J 15/06, F16J 15/10

(54) **BOHRLOCHABDICHTUNG, ANORDNUNG MIT EINER BOHRLOCHABDICHTUNG UND VERFAHREN ZUM ABDICHTEN EINES BOHRLOCHS**

(30) Priorität: 27.07.2021 DE 102021208092
(71) Anmelder: Adolf Würth GmbH & Co. KG, 74653 Künzelsau (DE)
(72) Erfinder: Albert, Aliz, 74653 Künzelsau (DE); Wieland, Achim, 74211 Leingarten (DE)
(74) Vertreter: Patentanwälte Ruff, Wilhelm, Beier, Dauster & Partner mbB

(57) **Zusammenfassung**

Die Erfindung betrifft eine Bohrlochabdichtung, insbesondere für Feuchträume, gekennzeichnet durch eine Scheibe (12) aus wenigstens teilweise plastisch verformbarem Material, wobei die Scheibe zum vollständigen Abdecken eines Bohrlochs (42), zum Aufkleben auf eine, das Bohrloch umgebende Oberfläche oder auf ein Bauelement und zum Durchstecken einer in das Bohrloch einzudrehenden Schraube (46) oder zum Durchstoßen mittels einer in das Bohrloch einzudrehenden Schraube ausgebildet ist.

## Beschreibung

Die Erfindung betrifft eine Bohrlochabdichtung, insbesondere für Feuchträume. Die Erfindung betrifft auch eine Anordnung mit einer Bohrlochabdichtung und ein Verfahren zum Abdichten eines Bohrlochs.

In Räumen mit erhöhter auftretender Feuchte an Boden und Wänden müssen diese Bereiche mit speziellen Vorkehrungen gesichert werden, so dass keine Feuchtigkeit in das Mauerwerk eindringen kann. Beim Wohnungsbau gilt das insbesondere für die Bereiche von Dusche und Badewanne in Badräumen. Hierzu muss eine wasserdichte Trennung zwischen Mauerwerk und Fliese eingezogen werden. Normalerweise wird dies durch einen Voranstrich des Mauerwerks, spezielle Abdichtungsbahnen oder spezielle Fliesen gewährleistet. Bei der Befestigung von Badarmaturen oder Ablageschalen mit Dübeln wird diese wasserdichte Trennung wieder durchstoßen.

Aus der EP 3 667 105 A1 ist eine Bohrlochabdichtung mittels eines speziellen Kunststoffspreizdübels bekannt. Der Dübel definiert ein Sackloch und in einem an eine Oberfläche des Mauerwerks angrenzenden Hülsenabschnitt des Dübels sind mehrere radiale Durchtrittsöffnungen vorgesehen. In dem Dübel ist ein Dichtmittel angeordnet, das beim Eindrehen einer Schraube innerhalb des Hülsenabschnitts verteilt und auch durch die radialen Durchgangsöffnungen im Hülsenabschnitt herausgedrückt wird und dadurch eine Abdichtung zwischen einer Innenwand des Bohrlochs, dem Hülsenabschnitt des Dübels und dem Schaft einer in den Dübel eingesteckten Schraube bereitstellt.

Mit der Erfindung sollen eine Bohrlochabdichtung, eine Anordnung mit einer Bohrlochabdichtung und ein Verfahren zum Abdichten eines Bohrlochs hinsichtlich einer flexiblen Einsetzbarkeit verbessert werden.

Erfindungsgemäß ist hierzu eine Bohrlochabdichtung, insbesondere für Feuchträume, vorgesehen, die eine Scheibe aus wenigstens teilweise plastisch verformbarem Material aufweist, wobei die Scheibe zum vollständigen Abdecken eines Bohrlochs, zum Aufkleben auf eine, das Bohrloch umgebende Oberfläche oder auf ein anzubringendes Bauelement und zum Durchstecken einer in das Bohrloch einzudrehenden Schraube oder zum Durchstoßen mittels einer in das Bohrloch einzudrehenden Schraube ausgebildet ist.

Mittels einer Bohrlochabdichtung, die aus einer einfachen Scheibe aus wenigstens teilweise plastisch verformbarem Material besteht oder eine solche Scheibe aufweist, lässt sich überraschenderweise eine äußerst flexibel einsetzbare Bohrlochabdichtung bereitstellen. Die Scheibe wird auf eine das Bohrloch umgebende Oberfläche oder auf eine für eine Schraube vorgesehene Durchgangsöffnung eines anzubringenden Bauelements geklebt und eine in das Bohrloch einzudrehende Schraube wird entweder in eine Durchgangsöffnung in der Scheibe eingesteckt oder die Schraube wird durch die Scheibe hindurchgestoßen. Beim Eindrehen der Schraube wird das Material der Scheibe entweder mittels der Schraube oder mittels eines Bauelements, das mittels der Schraube an einem Mauerwerk befestigt wird, komprimiert. Nach dem Überschreiten einer vordefinierten Belastung oder eines vordefinierten Drucks pro Fläche verformt sich das plastisch verformbare Material der Scheibe und wird dadurch komprimiert und/oder von seiner ursprünglichen Position, also dem auf das Bohrloch aufgeklebten Zustand, wenigstens teilweise verdrängt und verteilt. Das plastisch verformbare Material der Scheibe kann dadurch in sehr zuverlässiger Weise eine Abdichtung des Bohrlochs bereitstellen. Eine solche Abdichtung kann zwischen dem Schaft der Schraube, der Innenwand des Bohrlochs oder der Innenwand eines Dübels und/oder zwischen einer das Bohrloch umgebenden Oberfläche des Werkstücks und einer Unterseite des Kopfs der Schraube oder auch der Unterseite eines Bauelements, das mit der Schraube an dem Werkstück befestigt wird, erfolgen.

In Weiterbildung der Erfindung weist die Scheibe eine mit Klebstoff beschichtete Seite auf.

Auf diese Weise lässt sich die Scheibe in besonders einfacher Weise anbringen. Der Klebstoff muss nicht zunächst auf die Scheibe aufgetragen werden, sondern die Scheibe wird in äußerst einfacher Weise auf die das Bohrloch umgebende Oberfläche des Werkstücks oder auf ein anzubringendes Bauelement aufgeklebt.

In Weiterbildung der Erfindung ist die mit Klebstoff beschichtete Seite der Scheibe mit einer abziehbaren Folie versehen.

Auf diese Weise kann die erfindungsgemäße Bohrlochabdichtung in sehr einfacher Weise gehandhabt werden.

In Weiterbildung der Erfindung ist der Klebstoff ein Synthesekautschukklebstoff oder ein Butylklebstoff.

Unter dem Begriff Synthesekautschukklebstoff soll im Sinne der vorliegenden Erfindung ein Klebstoff verstanden werden, welcher ein Synthesekautschuk und Harz, insbesondere Kunstharz, aufweist.

Unter dem Begriff Synthesekautschuk soll ein elastisches Polymer verstanden werden.

Ein Vorteil von Synthesekautschuk gegenüber Naturkautschuk ist, dass Synthesekautschuk stabiler und alterungsbeständiger ist als Naturkautschuk.

Vorzugsweise handelt es sich bei dem Synthesekautschuk um ein Styrol-Blockcopolymer (SBC), insbesondere ein Styrol-Butadien-Styrol Polymer.

Ein besonderer Vorteil von Syntheskautschukklebstoffen ist, dass sie transparent ausgebildet sein können und eine hohe Beständigkeit gegenüber UV-Strahlung und Oxidation sowie eine hohe Undurchlässigkeit von Wasser aufweisen, wodurch eine hohe Alterungsbeständigkeit und Eignung für eine langfristige Anwendung im Außen- und Feuchtbereich ermöglicht wird.

Unter dem Begriff "Butylklebstoff" soll im Sinne der vorliegenden Erfindung ein Klebstoff verstanden werden, welcher Isobutylen, Naturkautschuk und Rußpartikel aufweist.

Unter dem Begriff "Naturkautschuk" soll im Sinne der vorliegenden Erfindung Kautschuk verstanden werden, welcher aus der Kautschukpflanze gewonnen wird.

Ein Vorteil von Naturkautschuk gegenüber Synthesekautschuk ist, dass der Naturkautschuk ohne den Zusatz von Klebstoffen, insbesondere Harzen, klebende Eigenschaften aufweist.

Ein besonderer Vorteil von Butylklebstoffen ist eine hohe Beständigkeit gegenüber UV-Strahlung und Oxidation sowie eine hohe Undurchlässigkeit von Wasser, wodurch eine hohe Alterungsbeständigkeit und Eignung für eine langfristige Anwendung im Außen- und Feuchtbereich ermöglicht wird.

In Weiterbildung der Erfindung ist die Scheibe mit einer Durchgangsöffnung zum Durchstecken einer Schraube versehen.

Auf diese Weise kann eine Schraube in sehr einfacher Weise durch die Scheibe durchgesteckt werden. Die Durchgangsöffnung ist auch eine Hilfe beim korrekten Positionieren der Bohrlochabdichtung. Die Durchgangsöffnung wird so ausgerichtet, dass sie mittig zum Bohrloch oder einem in dem Bohrloch angeordneten Dübel positioniert ist.

In Weiterbildung der Erfindung weist die Scheibe ein Schlauchstück auf, das die Durchgangsöffnung umgibt. Mittels eines solchen Schlauchstücks kann zum einen die Schraube geführt werden, zum anderen kann das Schlauchstück auch eine Hilfe beim Positionieren der Bohrlochabdichtung sein.

In Weiterbildung der Erfindung ragt das Schlauchstück wenigstens einseitig über eine Oberfläche der Scheibe hinaus.

Auf diese Weise kann das Schlauchstück in das Bohrloch oder in einen Dübel in dem Bohrloch eingeführt werden, so dass die Positionierung der Bohrlochabdichtung erleichtert ist.

In Weiterbildung der Erfindung weist die Scheibe eine mit Klebstoff beschichtete Seite auf und das Schlauchstück ragt über die mit Klebstoff beschichtete Seite der Scheibe hinaus.

In Weiterbildung der Erfindung ist das Material der Scheibe bis zu einer vordefinierten Belastung, insbesondere einer vordefinierten Kraft pro Fläche, elastisch verformbar und verformt sich bei Überschreiten der vordefinierten Belastung plastisch.

Dies erleichtert die Handhabung der erfindungsgemäßen Bohrlochabdichtung. Die Scheibe ist elastisch verformbar und kann dadurch in sehr einfacher Weise auf dem Bohrloch positioniert und an die das Bohrloch umgebende Oberfläche des Werkstücks angeklebt werden. Auch die Schraube kann dadurch in sehr einfacher Weise durch die Scheibe durchgesteckt werden oder mit der Schraube kann die Scheibe durchstoßen werden. Wird beim Eindrehen der Schraube dann ein erhöhter Druck auf das Material der Scheibe aufgebaut, beginnt sich dieses plastisch zu verformen und wird dadurch nicht nur komprimiert, sondern in der Regel auch verdrängt und verteilt. Dadurch kann das Material der Scheibe in Zwischenräume zwischen der Schraube und der Innenwand des Bohrlochs, zwischen der Schraube und einem Dübel im Bohrloch sowie zwischen dem Dübel und der Innenwand des Bohrlochs gelangen, aber auch in einen Zwischenraum zwischen einer Unterseite des Kopfs der Schraube und einer Oberfläche des Werkstücks oder zwischen die Unterseite eines Bauelements, das am Werkstück befestigt werden soll, und einer Oberfläche des Werkstücks. Die plastische Verformbarkeit des Materials der Scheibe kann dabei eine sehr zuverlässige Abdichtung sicherstellen.

Die Erfindung betrifft auch eine Anordnung mit einer Bohrlochabdichtung nach einem der vorstehenden Ansprüche und mit einem Bohrloch in einem Werkstück, insbesondere einer Gebäudewand eines Feuchtraums, sowie einer in das Bohrloch eingeschraubten Schraube, bei der die Schraube durch die Scheibe durchgesteckt worden ist oder mittels der Schraube die Scheibe durchstoßen worden ist und bei der das Material der Scheibe mittels Eindrehen der Schraube in das Bohrloch wenigstens teilweise komprimiert, verdrängt und/oder verteilt wurde.

In Weiterbildung der Erfindung ist das Material der Scheibe ein thermoplastisches Polymer, insbesondere ein thermoplastisches Polyethylen oder ein thermoplastisches Polyurethan.

Unter dem Begriff "thermoplastisch" soll im Sinne der vorliegenden Erfindung ein Material, insbesondere ein Polyethylen Material oder ein Polyurethan Material, verstanden werden, welches sich in einem bestimmten Temperaturbereich verformen lässt. Dieser Vorgang ist reversibel, das heißt, er kann durch Abkühlung und Wiedererwärmung bis in den schmelzflüssigen Zustand beliebig oft wiederholt werden.

Bevorzugt weist die Bohrlochabdichtung eine Scheibe aus thermoplastischem Polyethylen oder thermoplastischem Polyurethan auf, welche mit einem Synthesekautschukklebstoff oder einem Butylklebstoff beschichtet ist.

Weiter bevorzugt weist die Bohrlochabdichtung eine Scheibe aus thermoplastischem Polyethylen auf, welche mit einem Synthesekautschukklebstoff beschichtet ist oder eine Scheibe aus thermoplastischem Polyurethan auf, welche mit einem Butylklebstoff beschichtet ist.

In Weiterbildung der Erfindung ist das Material der Scheibe teilweise zwischen einem Abschnitt des Schafts der Schraube, der in einem von der Oberfläche des Werkstücks ausgehenden Anfangsabschnitts des Bohrlochs positioniert ist, und einer Innenwand des Bohrlochs im Anfangsabschnitt angeordnet.

In Weiterbildung der Erfindung ist das Material der Schraube wenigstens teilweise zwischen einer Unterseite des Schraubenkopfs oder einer Unterseite eines am Werkstück befestigten Bauelements und einer Oberfläche des Werkstücks, die das Bohrloch unmittelbar umgibt, angeordnet.

Die Erfindung betrifft auch ein Verfahren zum Abdichten eines Bohrlochs in einem Werkstück, insbesondere in einer Gebäudewand eines Feuchtraums, mit den Schritten: Aufkleben einer erfindungsgemäßen Bohrlochabdichtung auf das Bohrloch, so dass die Scheibe der Bohrlochabdichtung das Bohrloch vollständig abdeckt und die Scheibe auf eine Oberfläche des Werkstücks, die das Bohrloch umgibt, aufgeklebt ist, Durchstecken einer Schraube durch eine Durchgangsöffnung in der Scheibe oder Durchstoßen der Scheibe mittels einer Schraube, Eindrehen der Schraube in das Bohrloch oder in einen in das Bohrloch eingesetzten Dübel, so dass das Material der Scheibe wenigstens teilweise komprimiert, verdrängt und/oder verteilt wird.

In Weiterbildung der Erfindung ist das Komprimieren, Verdrängen und/oder Verteilen des Materials der Scheibe vorgesehen, so dass das Material der Scheibe teilweise zwischen einem Abschnitt des Schafts der Schraube, der in einem von der Oberfläche des Werkstücks ausgehenden Anfangsabschnitt des Bohrlochs positioniert ist, und einer Innenwand des Bohrlochs im Anfangsabschnitt angeordnet wird.

In Weiterbildung der Erfindung ist das Komprimieren, Verdrängen und/oder Verteilen des Materials der Scheibe vorgesehen, so dass das Material der Scheibe wenigstens teilweise zwischen einer Unterseite des Schraubenkopfs oder einer Unterseite eines am Werkstück befestigten Bauelements und einer Oberfläche des Werkstücks, die das Bohrloch unmittelbar umgibt, angeordnet ist.

Weitere Merkmale und Vorteile der Erfindung ergeben sich aus den Ansprüchen und der nachfolgenden Beschreibung bevorzugter Ausführungsformen der Erfindung im Zusammenhang mit den Zeichnungen. Einzelmerkmale der unterschiedlichen, in der Beschreibung beschriebenen oder den Zeichnungen dargestellten Ausführungsformen lassen sich dabei in beliebiger Weise miteinander kombinieren, ohne den Rahmen der Erfindung zu überschreiten. Dies gilt auch für die Kombination von Einzelmerkmalen ohne weitere Einzelmerkmale, mit denen sie im Zusammenhang dargestellt und/oder beschrieben sind. In den Zeichnungen zeigen:
- Fig. 1: eine erfindungsgemäße Bohrlochabdeckung gemäß einer ersten Ausführungsform der Erfindung von schräg hinten,
- Fig. 2: die Bohrlochabdeckung der Fig. 1 von schräg vorne,
- Fig. 3: die Bohrlochabdeckung der Fig. 1 von der Seite,
- Fig. 4: eine Bohrlochabdeckung gemäß einer zweiten Ausführungsform der Erfindung von schräg hinten,
- Fig. 5: die Bohrlochabdeckung der Fig. 4 von schräg vorne,
- Fig. 6: die Bohrlochabdeckung der Fig. 4 von der Seite,
- Fig. 7: eine Bohrlochabdeckung gemäß einer dritten Ausführungsform der Erfindung von schräg hinten,
- Fig. 8: die Bohrlochabdeckung der Fig. 7 von schräg vorne,
- Fig. 9: die Bohrlochabdeckung der Fig. 7 von der Seite,
- Fig. 10: eine teilweise geschnittene Ansicht einer Anordnung mit einer erfindungsgemäßen Bohrlochabdichtung,
- Fig. 11: einen vergrößerten Ausschnitt der Fig. 10 und
- Fig. 12: eine schematische Schnittansicht einer weiteren Anordnung mit einer erfindungsgemäßen Bohrlochabdichtung.

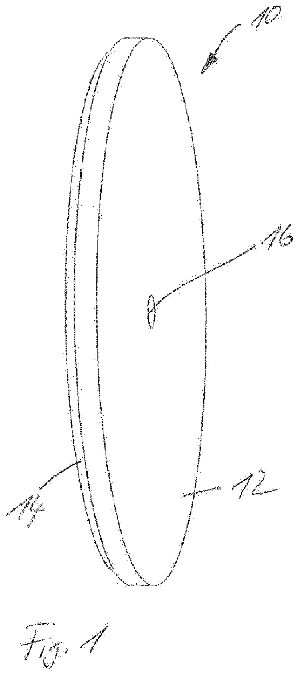

Fig. 1 zeigt eine erfindungsgemäße Bohrlochabdichtung 10 in einer Ansicht von schräg hinten. Die Bohrlochabdichtung 10 weist eine Scheibe 12 aus Kunststoffmaterial auf. Das Kunststoffmaterial der Scheibe 12 ist bis zu einer vordefinierten Belastung, also beispielsweise bis zu einem vordefinierten Druck oder einer vordefinierten Kraft pro Fläche oder auch bis zu einem vordefinierten Biegemoment, elastisch verformbar. Steigt die Belastung über das vordefinierte Maß hinaus, kann das Material der Scheibe 12 plastisch verformt werden.

Die Scheibe 12 ist weiter mit einer Klebstoffschicht 14 versehen. Die Klebstoffschicht 14 ist selbstklebend ausgeführt. Die Bohrlochabdichtung kann damit in sehr einfacher Weise auf eine ein Bohrloch umgebende Oberfläche aufgeklebt werden, beispielsweise auf die Fliesen einer Badezimmerwand. Die Klebstoffschicht 14 kann mit einer in Fig. 1 nicht dargestellten abziehbaren Folie geschützt sein, so dass die Handhabbarkeit der Bohrlochabdichtung 10 verbessert wird.

Die Scheibe 12 und die Klebstoffschicht 14 weisen eine konzentrisch angeordnete Durchgangsöffnung 16 auf. Die Durchgangsöffnung 16 ist dafür vorgesehen, eine Schraube zum Einschrauben in ein Bohrloch durchzustecken bzw. in die Durchgangsöffnung 16 einzuschrauben. Zweckmäßigerweise ist die Durchgangsöffnung 16 im Durchmesser kleiner als eine einzudrehende Schraube. Dadurch wird bereits beim Eindrehen der Schraube in die Durchgangsöffnung 16 das Material der Scheibe 12 komprimiert, verdrängt und verteilt und kann dadurch eine zuverlässige Bohrlochabdichtung bereitstellen.

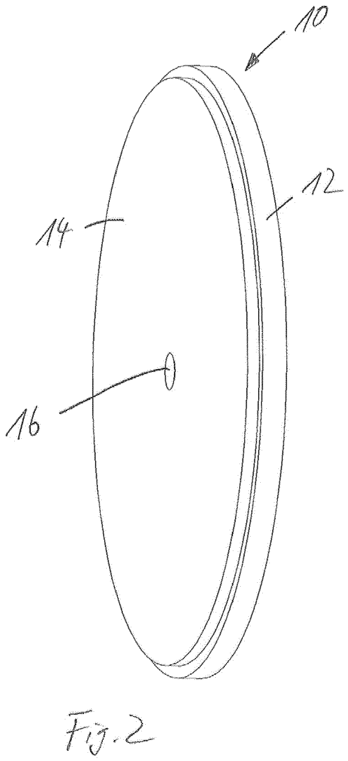

Fig. 2 zeigt die Bohrlochabdichtung 10 der Fig. 1 in einer Ansicht von schräg vorne.

Im Rahmen der Erfindung kann die Klebstoffschicht 14 auf der Scheibe 12 entfallen und auch die Durchgangsöffnung 16 kann im Rahmen der Erfindung entfallen. Vor dem Anbringen der Scheibe 12 an einem Bohrloch muss dann eine Seite der Scheibe 12 zunächst mit Klebstoff bestrichen werden. Entfällt die Durchgangsöffnung 16, kann eine Schraube durch das Material der Scheibe 12 hindurchgestoßen werden.

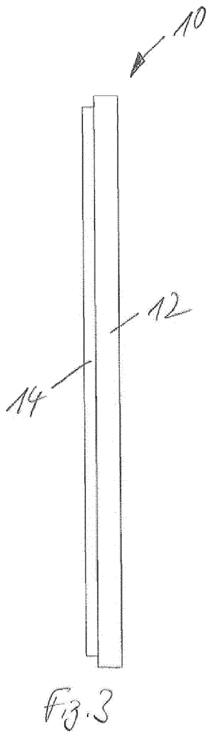

Fig. 3 zeigt die Bohrlochabdichtung 10 der Fig. 1 in einer Seitenansicht. Ein Durchmesser der Klebstoffschicht 14 ist geringfügig kleiner als ein Durchmesser der Scheibe 12. Die Scheibe 12 überragt die Klebstoffschicht 14 damit in radialer Richtung.

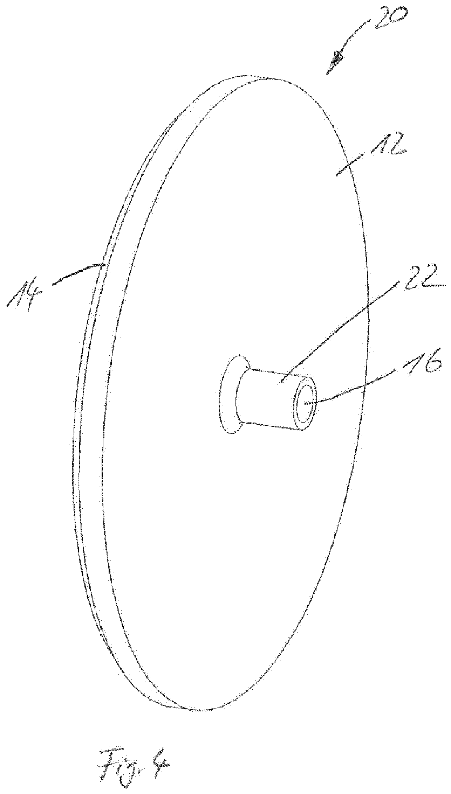

Fig. 4 zeigt eine zweite Ausführungsform einer erfindungsgemäßen Bohrlochabdichtung 20 in einer Ansicht von schräg hinten. Die Bohrlochabdichtung 20 weist, wie die Bohrlochabdichtung 10 der Fig. 1, eine Scheibe 12 aus elastisch und plastisch verformbarem Kunststoffmaterial sowie eine Klebstoffschicht 14 auf einer Seite der Scheibe 12 auf. Die Scheibe 15 und die Klebstoffschicht sind auch mit einer Durchgangsöffnung 16 versehen. Im Unterschied zur Bohrlochabdichtung 10 ragt auf der, der Klebstoffschicht 14 abgewandten Oberseite der Scheibe 12 ein Schlauchstück 22 über die Oberseite der Scheibe 12 hinaus. Das Schlauchstück 22 definiert damit einen Abschnitt der Durchgangsöffnung 16. Das Schlauchstück 22 dient dazu, eine Schraube beim Einstecken bzw. Eindrehen in die Durchgangsöffnung 16 zu führen. Das Schlauchstück 22 kann auch dazu verwendet werden, ein anzubringendes Bauelement, beispielsweise eine Seifenschale oder einen Halter, relativ zum Bohrloch exakt zu positionieren. Das Schlauchstück 22 kann dann in einer Durchgangsöffnung im Bauelement angeordnet werden und dann wird das Bauelement zusammen mit der Bohrlochabdichtung 20 auf einem Bohrloch positioniert. Dies ist insbesondere dann vorteilhaft, wenn ein Bauelement mit mehreren Schrauben und damit mittels mehrerer Bohrlöcher an einer Wand positioniert werden soll. Die Bohrlochabdichtungen 20 werden dann mit ihren jeweiligen Schlauchstücken 22 in Durchgangsöffnungen des Bauelements positioniert und das Bauelement wird dann zusammen mit den Bohrlochabdichtungen 20 relativ zum Werkstück bzw. relativ zu den Bohrlöchern positioniert. Dadurch können dann mittels der Klebstoffschichten 14 gleichzeitig die Bohrlochabdichtungen 20 an das Werkstück angeklebt werden. Die Bohrlochabdichtung 20 kann im Rahmen der Erfindung sowohl an der Oberseite als auch an der Unterseite mit einer Klebstoffschicht versehen sein.

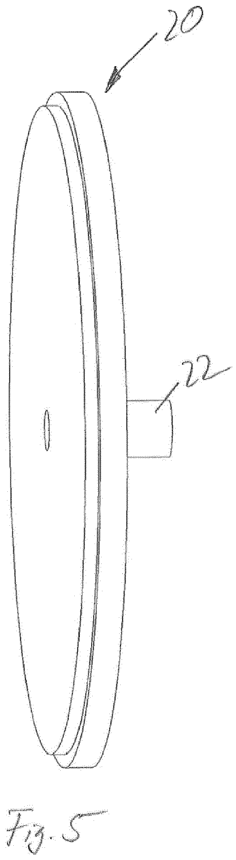

Fig. 5 zeigt die Bohrlochabdichtung 20 der Fig. 4 in einer Ansicht von schräg vorne.

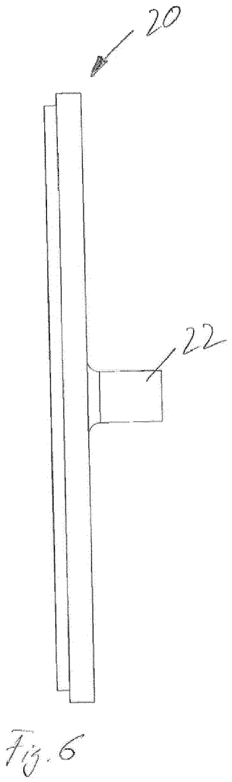

Fig. 6 zeigt die Bohrlochabdichtung 20 der Fig. 4 in einer Ansicht von der Seite.

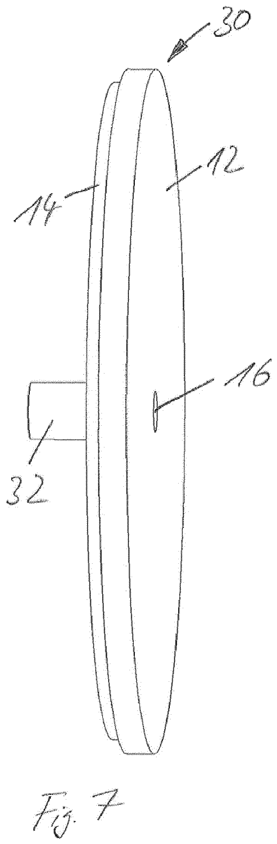

Fig. 7 zeigt eine dritte Ausführungsform einer erfindungsgemäßen Bohrlochabdichtung 30 von schräg hinten. Die Bohrlochabdichtung 30 ist weitestgehend gleich aufgebaut wie die Bohrlochabdichtung 10 der Fig. 1, so dass lediglich die Unterschiede zur Bohrlochabdichtung 1 erläutert werden. Neben der Scheibe 12 und der Klebstoffschicht 14 und der Durchgangsöffnung 16 weist die Bohrlochabdichtung 30 ein Schlauchstück 32 auf, das über eine Unterseite der Scheibe 12 hinausragt. Im Unterschied zur Bohrlochabdichtung 20 der Fig. 4 ragt das Schlauchstück 32 also auf der entgegengesetzten Seite der Scheibe 12 über diese hinaus. Das Schlauchstück 32 ragt auch über die Klebstoffschicht 14 hinaus. Das Schlauchstück 32 kann dadurch zum Zentrieren der Bohrlochabdichtung 30 in einem Bohrloch oder in einer Durchgangsöffnung eines Bauelements verwendet werden.

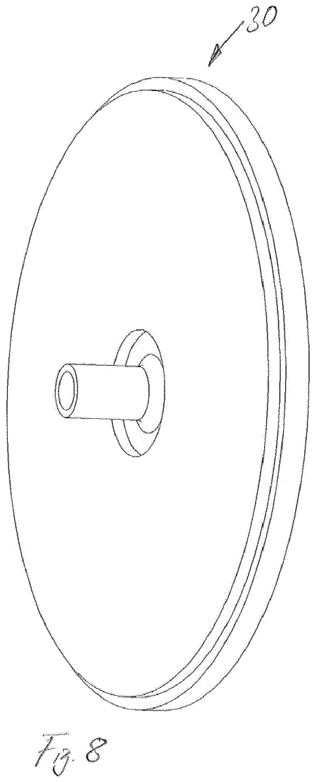

Fig. 8 zeigt die Bohrlochabdichtung 30 der Fig. 7 von schräg vorne.

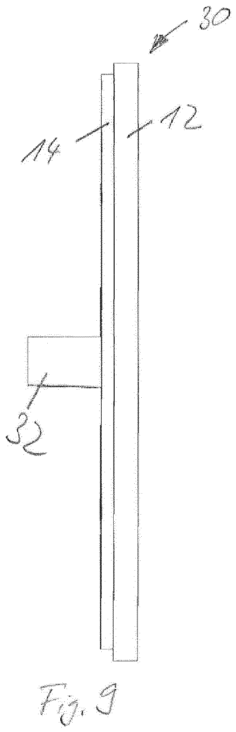

Fig. 9 zeigt die Bohrlochabdichtung 30 der Fig. 7 von der Seite.

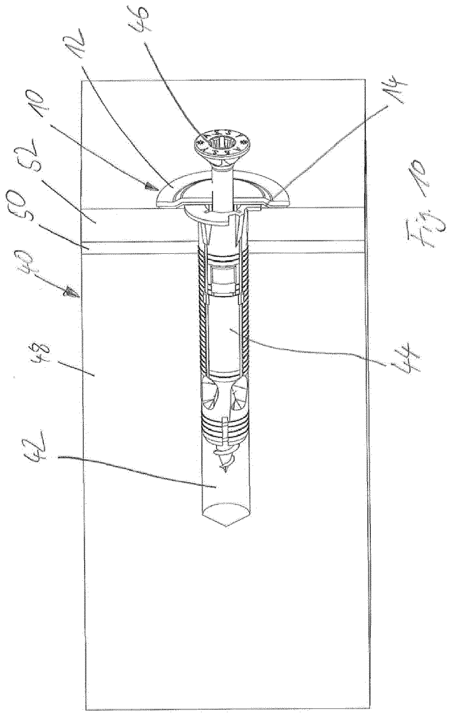

Fig. 10 zeigt eine erfindungsgemäße Anordnung mit einer Bohrlochabdichtung 10, einer Gebäudewand 40, in der ein Bohrloch 42 angeordnet ist, wobei in dem Bohrloch 42 ein Kunststoffdübel 44 positioniert ist. Durch die Bohrlochabdichtung 10 hindurchgesteckt ist eine Schraube 46, die zum Befestigen eines nicht dargestellten Bauelements an der Gebäudewand 40 dient. Die Gebäudewand 40 besteht aus Mauerwerk 48, einer Abdichtungsschicht 50 sowie einer Fliesenschicht 52. Es ist zu erkennen, dass das Bohrloch 42 die Fliesenschicht 52 und die Abdichtungsschicht 50 vollständig durchsetzt. In Feuchträumen muss daher dafür gesorgt werden, dass das Bohrloch 42 gegenüber eindringender Feuchtigkeit abgedichtet wird, so dass keine Feuchtigkeit in das Mauerwerk 48 gelangen kann.

Dies wird in sehr einfacher und flexibler Weise mittels der Bohrlochabdichtung 10 erreicht. Nach dem Einsetzen des Dübels 44 in das Bohrloch 42 wird die Bohrlochabdichtung 10 so auf dem Bohrloch bzw. auf dem Kragen des Dübels 44 positioniert, dass die Scheibe 12 über den Umfang des Bohrlochs und auch über den Umfang des Kragens des Dübels 44 hinausragt. Auch die Klebstoffschicht 14 ragt bei der dargestellten Ausführungsform nicht nur über das Bohrloch 42, sondern auch über den Kragen des Dübels 44 hinaus. Wird nun die Scheibe 12 zwischen der Schraube 46 oder einem nicht dargestellten Bauelement und der Oberfläche der Fliesenschicht 52 komprimiert, so wird das Material der Scheibe 12 plastisch verformt und dabei teilweise verdrängt und verteilt. Das Material der Scheibe 12 kann dadurch einen Zwischenraum zwischen einer der Fliesenschicht 52 zugewandten Unterseite der Schraube 46 oder des Bauelements und der Oberseite der Fliesenschicht 52 zuverlässig abdichten. Darüber hinaus wird auch ein Zwischenraum zwischen dem Schaft der Schraube 46 und der Scheibe 12 zuverlässig abgedichtet. Das Bohrloch 42 ist damit zuverlässig gegenüber eindringender Feuchtigkeit abgedichtet.

Die Bohrlochabdichtung 10 kann dabei in sehr flexibler Weise sowohl mit einem Dübel 44, der einen Kragen aufweist, als auch mit Dübeln ohne Kragen eingesetzt werden. Die Bohrlochabdichtung 10 kann auch in Verbindung mit Schrauben eingesetzt werden, die ohne Dübel in einer Wand befestigt werden. Dies können beispielsweise Betonschrauben sein, beispielsweise aber auch Holzschrauben, die unmittelbar in eine hölzerne Unterkonstruktion einer Gebäudewand eingeschraubt werden. Der Dübel 44 kann im Rahmen der Erfindung selbstverständlich auch als Hohlwanddübel oder auch als Dübel für Wärmedämmverbundsysteme ausgebildet sein.

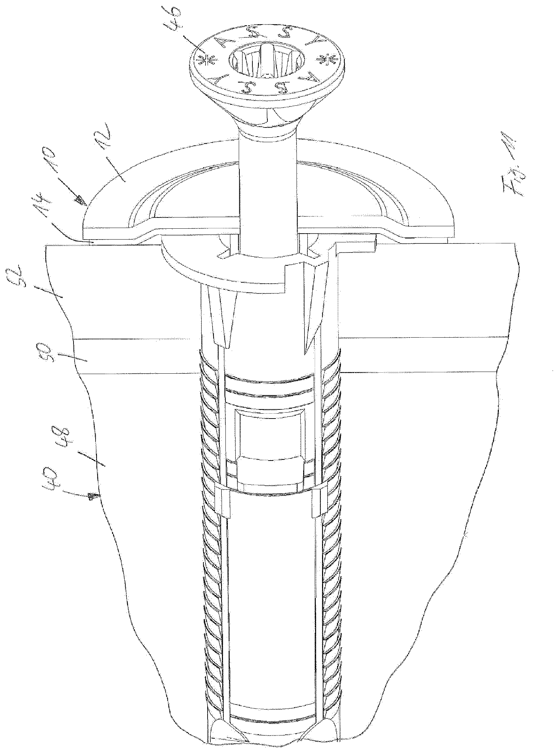

Fig. 11 zeigt einen vergrößerten Ausschnitt der Fig. 10. Es ist gut zu erkennen, dass die Bohrlochabdichtung 10 auf die Fliesenschicht 52 mittels der Klebstoffschicht 14 aufgeklebt wird und dass der Schaft der Schraube 46 dichtend und ohne Zwischenraum an der Scheibe 12 anliegt.

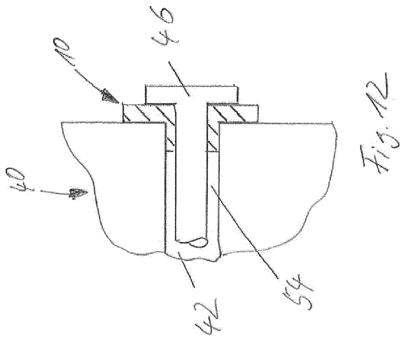

Fig. 12 zeigt eine erfindungsgemäße Anordnung gemäß einer weiteren Ausführungsform der Erfindung in schematischer Darstellung. Die Gebäudewand 40 weist ein Bohrloch 42 auf, in das die Schraube 46 ohne Zwischenfügen eines Dübels eingesteckt worden ist. Die Bohrlochabdichtung 10 wird zwischen der Unterseite des Kopfs der Schraube 46 und der das Bohrloch 42 umgebenden Oberfläche der Gebäudewand 40 komprimiert. Anstelle einer Unterseite des Schraubenkopfs 46 kann auch die Unterseite eines nicht dargestellten Bauelements vorgesehen sein, das mittels der Schraube 46 an die Oberfläche der Gebäudewand 40 angepresst wird. Das plastisch verformbare Material der Bohrlochabdichtung 10 wird komprimiert und dadurch abschnittsweise verdrängt und verteilt, so dass es in einen Zwischenraum 54 zwischen dem Schaft der Schraube 46 und der Innenwand des Bohrlochs 42 gelangt. In den unmittelbar an die Oberfläche der Gebäudewand 40 anschließenden Anfangsabschnitt des Bohrlochs 42 füllt das Material der Scheibe der Bohrlochabdichtung 10 dadurch diesen Ringraum zwischen der Innenwand des Bohrlochs 42 und dem Schaft der Schraube 46, also den Ringraum 54, vollständig aus. Das Bohrloch 42 ist dadurch zuverlässig gegen eindringende Feuchtigkeit abgedichtet.

## Patentansprüche

1. Bohrlochabdichtung, insbesondere für Feuchträume, **gekennzeichnet durch** eine Scheibe aus wenigstens teilweise plastisch verformbaren Material, wobei die Scheibe zum vollständigen Abdecken eines Bohrlochs, zum Aufkleben auf eine, das Bohrloch umgebende Oberfläche oder auf ein anzubringendes Bauelement und zum Durchstecken einer in das Bohrloch einzudrehenden Schraube oder zum Durchstoßen mittels einer in das Bohrloch einzudrehenden Schraube ausgebildet ist.

2. Bohrlochabdichtung nach Anspruch 1, **dadurch gekennzeichnet, dass** die Scheibe eine mit Klebstoff beschichtete Seite aufweist.

3. Bohrlochabdichtung nach Anspruch 2, **dadurch gekennzeichnet, dass** die mit Klebstoff beschichtete Seite der Scheibe mit einer abziehbaren Folie versehen ist.

4. Bohrlochabdichtung nach Anspruch 2 oder 3, **dadurch gekennzeichnet, dass** der Klebstoff ein Synthesekautschukklebstoff oder ein Butylklebstoff ist.

5. Bohrlochabdichtung nach einem der vorstehenden Ansprüche, **dadurch gekennzeichnet, dass** die Scheibe mit einer Durchgangsöffnung zum Durchstecken einer Schraube versehen ist.

6. Bohrlochabdichtung nach Anspruch 5, **dadurch gekennzeichnet, dass** die Scheibe ein Schlauchstück aufweist, das die Durchgangsöffnung umgibt.

7. Bohrlochabdichtung nach Anspruch 6, **dadurch gekennzeichnet, dass** das Schlauchstück wenigstens einseitig über eine Oberfläche der Scheibe hinausragt.

8. Bohrlochabdichtung nach Anspruch 7, **dadurch gekennzeichnet, dass** die Scheibe eine mit Klebstoff beschichtete Seite aufweist und das Schlauchstück über die mit Klebstoff beschichtete Seite der Scheibe hinausragt.

9. Bohrlochabdichtung nach wenigstens einem der vorstehenden Ansprüche, **dadurch gekennzeichnet, dass** das Material der Scheibe bis zu einer vordefinierten Belastung, insbesondere einer vordefinierten Kraft pro Fläche, elastisch verformbar ist und sich bei Überschreiten der vordefinierten Belastung plastisch verformt.

10. Bohrlochabdichtung nach einem der vorstehenden Ansprüche, **dadurch gekennzeichnet, dass** das Material der Scheibe ein thermoplastisches Polymer, insbesondere ein thermoplastisches Polyethylen oder ein thermoplastisches Polyurethan, ist.

11. Anordnung mit einer Bohrlochabdichtung nach einem der vorstehenden Ansprüche und mit einem Bohrloch in einem Werkstück, insbesondere einer Gebäudewand eines Feuchtraums, sowie einer in das Bohrloch eingeschraubten Schraube, **dadurch gekennzeichnet, dass** die Schraube durch die Scheibe durchgesteckt worden ist oder mittels der Schraube die Scheibe durchstoßen worden ist und dass das Material der Scheibe mittels Eindrehen der Schraube in das Bohrloch wenigstens teilweise komprimiert, verdrängt und/oder verteilt wurde.

12. Anordnung nach Anspruch 11, **dadurch gekennzeichnet, dass** das Material der Scheibe teilweise zwischen einem Abschnitt des Schafts der Schraube, der in einem von der Oberfläche des Werkstücks ausgehenden Anfangsabschnitt des Bohrlochs positioniert ist, und einer Innenwand des Bohrlochs im Anfangsabschnitt angeordnet ist.

13. Anordnung nach Anspruch 11 oder 12, **dadurch gekennzeichnet, dass** das Material der Scheibe wenigstens teilweise zwischen einer Unterseite des Schraubenkopfs oder einer Unterseite eines am Werkstück befestigten Bauelements und einer Oberfläche des Werkstücks, die das Bohrloch unmittelbar umgibt, angeordnet ist.

14. Verfahren zum Abdichten eines Bohrlochs in einem Werkstück, insbesondere in einer Gebäudewand eines Feuchtraums, mit den Schritten: Aufkleben einer Bohrlochabdichtung nach einem der Ansprüche 1 bis 10 auf das Bohrloch, so dass die Scheibe der Bohrlochabdichtung das Bohrloch vollständig abdeckt und die Scheibe auf eine Oberfläche des Werkstücks, die das Bohrloch umgibt, aufgeklebt ist, Durchstecken einer Schraube durch eine Durchgangsöffnung in der Scheibe oder Durchstoßen der Scheibe mittels einer Schraube, und Eindrehen der Schraube in das Bohrloch oder in einen in das Bohrloch eingesetzten Dübel, so dass das Material der Scheibe wenigstens teilweise komprimiert, verdrängt und/oder verteilt wird.

15. Verfahren nach Anspruch 14, **gekennzeichnet durch** Komprimieren, Verdrängen und/oder Verteilen des Materials der Scheibe, so dass das Material der Scheibe teilweise zwischen einem Abschnitt des Schafts der Schraube, der in einem von der Oberfläche des Werkstücks ausgehenden Anfangsabschnitt des Bohrlochs positioniert ist, und einer Innenwand des Bohrlochs im Anfangsabschnitt angeordnet wird.

16. Verfahren nach Anspruch 14 oder 15, **gekennzeichnet durch** Komprimieren, Verdrängen und/oder Verteilen des Materials der Scheibe, so dass das Material der Scheibe wenigstens teilweise zwischen einer Unterseite des Schraubenkopfs oder einer Unterseite eines am Werkstück befestigten Bauelements und einer Oberfläche des Werkstücks, die das Bohrloch unmittelbar umgibt, angeordnet ist.
